(19) Europäisches Patentamt
European Patent Office
Office européen des brevets

(11) **EP 3 462 756 A1**

(12) **EUROPEAN PATENT APPLICATION**

(43) Date of publication:
**03.04.2019 Bulletin 2019/14**

(51) Int Cl.:
**H04W 4/08** (2009.01)  **H04B 7/0452** (2017.01)
**H04W 84/12** (2009.01)  **H04W 72/12** (2009.01)

(21) Application number: **17194162.8**

(22) Date of filing: **29.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Intel Corporation**
**Santa Clara, CA 95054 (US)**

(72) Inventors:
• **ALPERT, Yaron**
4533909 Hod Hasharon (IL)
• **PISAREVSKI, Alex**
Netanya, 4265948 (IL)
• **KLEIN, Arik**
5442024 Givaat Shmuel (IL)

(74) Representative: **Lambsdorff & Lange**
**Patentanwälte**
**Partnerschaft mbB**
**Grillparzerstraße 12A**
**81675 München (DE)**

(54) **METHOD OF ASSIGNING GROUP-IDS AND USER POSITIONS TO STATIONS IN A WIRELESS NETWORK**

(57)    A method of assigning group-IDs and user positions to stations in a wireless network may comprise determining a number of multi-user multiple-input-multiple-output capable stations associated with an access point, selecting a set of stations that can be served simultaneously by the access point, mapping the set of stations to a minimal set of group-IDs, wherein each station has concurrent membership in at least two of the group-IDs, wherein each user position in each of the group-IDs may be populated by two or more of the stations, and wherein user positions of the stations in the different group-IDs vary such that for any combination of the stations from the set of stations at least one group-ID exists, in which the stations of that combination have different user positions, such that simultaneous transmission streams may be sent from the access point to any combination of the stations from the set of stations in a single physical layer convergence protocol data unit (PPDU).

Fig. 1

**Description**

**FIELD**

This disclosure relates to a method of assigning group-IDs and user positions to stations in a wireless network, a WLAN access point and a computer readable non-transitory medium.

**BACKGROUND**

Wireless networks, for example wireless local area networks (WLANs) may utilize a networking standard like, for example, a standard in the 802.11 family. One standard in the 802.11 family is the exemplary IEEE 802.11ac standard (802.11ac for short). 802.11ac offers several improvements over previous standards, like higher data rates, wider radio frequency (RF) bandwidth, more multiple-input-multiple-output (MIMO) spatial streams and downlink multi-user MIMO (MU-MIMO). Downlink MU-MIMO is a technique that allows an access point (AP) with more than one antenna to transmit a physical layer (PHY) protocol data unit (PPDU) to multiple receiving stations (STAs) over the same radio frequencies, wherein each STA simultaneously receives one or more distinct space-time streams. In IEEE 802.11ac MU-MIMO up to four simultaneous downlink (DL) STAs may be served by one AP. In other words, in 802.11ac DL MU-MIMO one transmitting device sends simultaneous transmissions to up to four receiving devices.

Establishing a 802.11ac DL MU-MIMO transmission requires the AP to unite all intended receiving STAs in a group of stations, allocate user positions for the group members and signal group-ID and user position to specific group members by transmitting a dedicated management frame to each group member. Subsequently, each group member has to confirm the successful reception of the dedicated management frame, otherwise the protocol does not allow initiating DL MU-MIMO to this group member. Moreover, any change in group membership and/or group user positions requires a further signal to the specific group member that was regrouped/repositioned by transmission and confirmation of reception of the dedicated management frame. This 802.11ac DL MU-MIMO assigning and allocation signaling methodology may cause overhead and delay or even blackout periods in DL MU-MIMO transmission.

**BRIEF DESCRIPTION OF THE DRAWINGS**

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.

Figure 1 schematically shows a network environment comprising an access point and several stations associated with the access point.

Figure 2A schematically shows a further network environment comprising an access point and stations A-H. Figures 2B-2D schematically show several examples of simultaneous transmissions from the access point to different combinations of stations drawn from the stations A-H.

Figure 3 shows several minimal sets of user groups that can be used to establish simultaneous transmissions from an access point to several stations in a network environment according to the disclosure.

Figure 4 shows an example of how the minimal set of groups 304 of Fig. 3 covers all 220 possibilities of selecting three STAs out of 12 STAs for simultaneous transmission.

Figure 5 shows a flow diagram of a method for assigning group-IDs and user positions to stations in a wireless network according to the disclosure.

Figure 6 schematically shows an example of an access point suitable for simultaneously transmitting to several stations according to the disclosure.

Figure 7 shows a process flow according to a method for assigning group-IDs and user positions to STAs according to the disclosure.

**DETAILED DESCRIPTION**

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device configured to perform the method and vice versa. For example, if a specific method task is described, a corresponding device may include a unit to perform the described method task, even if such a unit is not explicitly described or illustrated in the figures. Further, it is understood that the features of the various exemplary aspects described herein may be combined with each other, unless specifically noted otherwise.

The methods and devices described herein may be implemented in wireless communication networks, in particular WiFi communication networks based on standards such as e.g. IEEE 802.11, in particular 802.11ac. The methods and devices described below may be implemented in base stations or access points. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be configured to transmit and/or receive radio signals. Radio signals may be or may include radio frequency signals radiated by a radio transmitting device (or radio transmitter or sender) with a radio frequency lying in a range of about 3 Hz to 300 GHz, in particular 800 MHZ, 2.4 GHz ,5 GHz, 6GHz, 45GHz, or 60 GHz. The frequency range may correspond to frequencies of alternating current electrical signals used to produce and detect radio waves.

The methods and devices described hereinafter may be applied in MIMO systems and diversity receivers. Multiple-input multiple-output (MIMO) wireless communication systems employ multiple antennas at the transmitter and/or at the receiver to increase system capacity and to achieve better quality of service. In spatial multiplexing mode, MIMO systems may reach higher peak data rates without increasing the bandwidth of the system by transmitting multiple data streams in parallel in the same frequency band. A diversity receiver uses two or more antennas to improve the quality and reliability of a wireless link.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

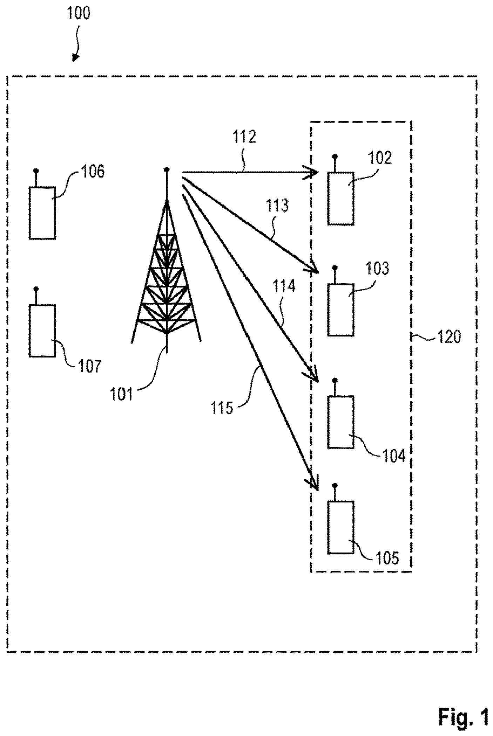

Figure 1 shows a network environment 100 comprising an AP 101 and stations 102, 103, 104 and 105 that are associated with the AP 101. The network environment 100 may comprise further stations associated with the access point 101, for example further stations 106 and 107 or any other number of further stations that the AP 101 is configured to handle. The network environment 100 may be a WLAN.

The AP 101 is configured to allow for the simultaneous transmission of several data streams. For example AP 101 may transmit to up to four STAs simultaneously. Fig. 1 shows am example, wherein the AP 101 sends simultaneous spatial streams 112, 113, 114 and 115 to the STAs 102, 103, 104 and 105, respectively. The AP 101 may send the spatial streams 112, 113, 114 and 115 according to the DL MU-MIMO mode stipulated by the 802.11ac or 802.11ax standard.

In order to transmit in the DL MU-MIMO mode, the AP 101 may perform a dedicated channel learning process using a measurement exchange flow (MU beamforming feedback) in order to collect information about the channel state of the STAs 102, 103,... in the network environment 100, in particular a simultaneous MIMO channel state of the STAs 102, 103,... (i.e. mutual channel orthogonality for simultaneous DL MU-MIMO transmission). The AP 101 may allocate a number of STAs that it is able to transmit to simultaneously to a dedicated group and assign a specific group-ID to this group, as well as user positions to the group members.

For example and as shown in Fig. 1, the AP 101 may decide to transmit to STAs 102, 103, 104 and 105 simultaneously and therefore allocates these stations into a group 120 and assigns a unique group-ID to group 120 and that group's user positions to STAs 102-105. This group-ID and these user positions may be communicated by AP 101 to STAs 102, 103, 104 and 105 via a dedicated management frame, for example the Group-ID management frame.

According to the 802.11ac standard, AP 101 cannot send a MU-MIMO transmission to the group 120 until all group members (that is, all of the STAs 102, 103, 104 and 105) have confirmed successful reception of the dedicated management frame that informs the group members of their group-ID and user positions.

In the network environment 100 an efficient method to establish a DL MU-MIMO transmission is used. In short, the AP 101 arranges DL MU-MIMO capable stations into a minimal set of groups ("minimal set of groups" may also be termed "minimal set of 802.11 group-IDs" herein) such that each station may be a member of several groups of the minimal set of groups and such that each user position in these groups may be populated by more than one station. The minimal set of groups is configured such that for any possible combination of specific stations the minimal set of groups comprises at least one group in which each of the specific stations has a unique user position. The AP 101 then choses this group on an ad hoc basis for transmission. A station may retain membership in all the groups it was assigned to until it disassociates from the AP 101. This scheme is explained in more detail in the following.

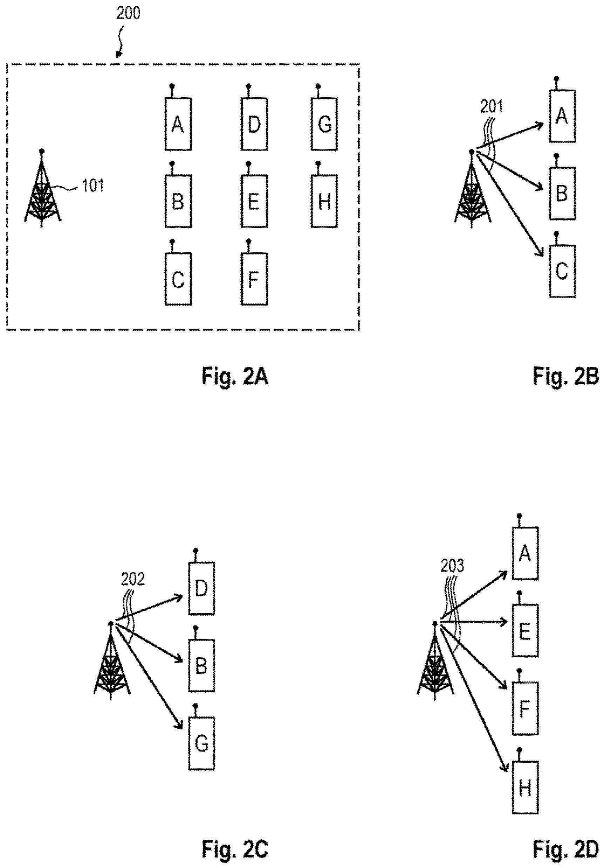

Figure 2A shows a network environment 200 which may be identical to the network environment 100.

The network environment 200 comprises AP 101 and eight STAs A, B, C, D, E, F, G and H associated with the AP 101 and capable of DL MU-MIMO communication. At different instances the AP 101 may transmit DL MU-MIMO transmissions to different stations (i.e. any combination of the STAs A-H). For example, as shown in Figures 2B-2D, AP 101 may send a DL MU-MIMO transmission 201 to STAs A, B and C at a first instance, another DL MU-MIMO transmission 202 to STAs D, B and G at a second instance and yet another DL MU-MIMO transmission 203 to STAs A, E, F and H at a third instance.

The AP 101 may transmit a DL MU-MIMO transmission to any combination of up to four STAs selected from the STAs AH. In particular, there are 28 possibilities to select two stations from the eight stations A-H, 56 possibilities to select three stations from the eight stations A-H and 70 possibilities to select four stations from the eight stations A-H. Generally speaking, these numbers can be obtained from the binomial coefficient $\binom{n}{k}$ which gives the number of ways to choose a subset of size k elements, disregarding their order, out of a set of n elements.

As can be seen from the above analysis, in the case of DL MU-MIMO transmissions to four stations out of eight stations, the number of possible combinations (70 combinations) is bigger than the maximum number of group-IDs in the 802.11ac standard, which is 64 (effectively 62, because group-IDs number 0 and 63 are reserved). It is therefore not possible to assign a separate group-ID to each one of these 70 combinations. Therefore, a conventional AP may have to signal a new group-ID to the STAs and wait for confirmation every time a change in the STAs to which a DL MU-MIMO transmission is to be sent occurs.

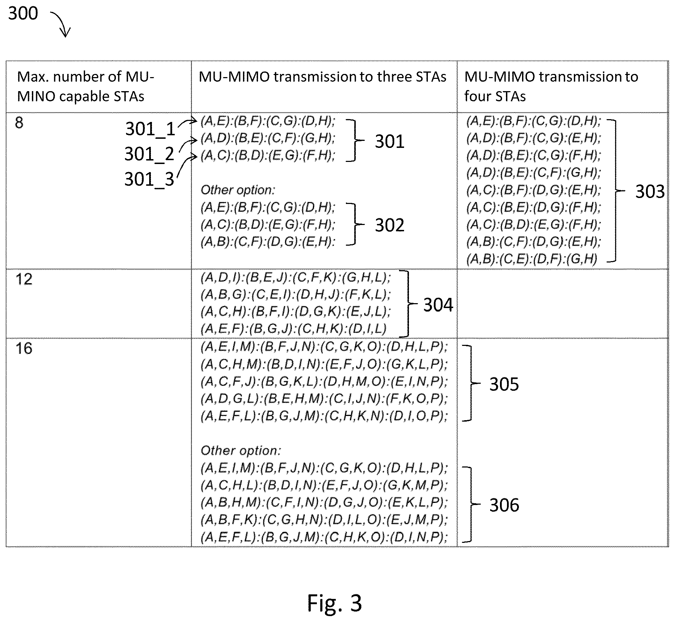

However, a minimal set of groups comprising of only three group-IDs is sufficient to obtain each one of the 70 combinations of STAs A-H as shown in the following. Thus, the AP 101 does not have to assign a new group-ID (and perform the signaling and confirmation process mentioned above) every time that the STAs to which a DL MU-MIMO transmission is to be sent change. Instead, when such a change occurs, the AP 101 can use the group-IDs of the minimal set of groups (which were already signaled to the STAs) in order to send a DL MU-MIMO transmission to the new selection of STAs. Examples of such minimal sets are shown in Figure 3.

Figure 3 shows a table 300 comprising exemplary minimal sets 301-306. The minimal set of groups 301 or the minimal set of groups 302 may be used in the case that no more than eight DL MU-MIMO capable stations are served by an access point and a DL MU-MIMO transmission to three stations in group is desired (as shown in the examples of Figs. 2B and 2C). The minimal set of groups 303 may be used in the case that no more than eight DL MU-MIMO capable stations are served by an access point and a DL MU-MIMO transmission to four stations in group is desired (as shown in the example of Fig. 2D). The minimal set of groups 304 may be used in the case that no more than 12 DL MU-MIMO capable stations are served by an access point and a DL MU-MIMO transmission to three stations in group is desired. The minimal set of groups 305 or the minimal set of groups 306 may be used in the case that no more than 16 DL MU-MIMO capable stations are served by an access point and a DL MU-MIMO transmission to three stations in group is desired.

Each of the minimal sets 301-306 comprises several groups, wherein each group comprises several stations. For example, the minimal set of groups 301 comprises the groups 301_1, 301_2 and 301_3. Each of the groups may be configured like a standard 802.11ac group and may in particular comprise up to four user positions (which are usually numbered from 0 to 3). Furthermore, each group may have a corresponding group-ID. For example, group 301_1 may have the group-ID 1, group 301_2 may have the group-ID 2 and group 301_3 may have the group-ID 3.

In group 301_1 stations A and E are assigned to the first user position (user position 0), stations B and F are assigned to the second user position (user position 1), stations C and G are assigned to the third user position (user position 2) and stations D and H are assigned to the fourth user position (user position 3).

For example, eight DL MU-MIMO capable STAs A-H may be associated with an AP 101 and a simultaneous transmission to STAs A, D and G is intended. The AP 101 may therefore use minimal set of groups 301 or 302 (no more than eight DL MU-MIMO capable stations are associated with the AP and simultaneous transmission to up to three stations in group). Without loss of generality, the AP 101 may choose to use the minimal set of groups 301. In that case, the AP 101 can transmit either using the group-ID 1 (of group 301_1), or the group-ID 3 (of group 301_3), since STAs A, D and G each occupy different user positions in each of these groups. Group-ID 2 (of group 301_2) however cannot be used, since STAs A and D occupy the same user position (user position 0) in group 301_2.

A minimal set of groups may comprise a number of groups that is smaller than the number of all possible combinations of STAs for a given number of DL MU-MIMO capable STAs and a desired number of simultaneous transmissions. For example, a minimal set of groups may comprise three groups in the case of up to eight DL MU-MIMO capable STAs associated with an AP and three simultaneous transmissions (56 possible combinations of STAs); a minimal set of groups may comprise nine groups in the case of up to eight DL MU-MIMO capable STAs associated with an AP and four simultaneous transmissions (280 possible combinations of STAs); a minimal set of groups may comprise four groups in the case of up to twelve DL MU-MIMO capable STAs associated with an AP and three simultaneous transmissions (220 possible combinations of STAs); a minimal set of groups may comprise five groups in the case of up to sixteen DL MU-MIMO capable STAs associated with an AP and three simultaneous transmissions (560 possible combinations of STAs).

Different minimal sets may comprise different numbers of STAs assigned to the same user position. In particular, minimal sets for different numbers of DL MU-MIMO capable STAs and different numbers of desired simultaneous transmissions may comprise different numbers of STAs assigned to the same user position. For example, a minimal set of groups like the minimal sets 301 and 302 usable for up to eight STAs and up to three simultaneous transmissions may comprise up to two STAs assigned to the same user position, compare Fig. 3. A minimal set of groups like the minimal set 303 of groups for up to eight STAs and up to four simultaneous transmissions may comprise up to two STAs assigned to the same user position. A minimal set of groups like the minimal set of groups 304 for up to twelve STAs and up to three simultaneous transmissions may comprise up to three STAs assigned to the same user position. A minimal set of groups like the minimal sets 305 and 306 for up to sixteen STAs and up to three simultaneous transmissions may comprise up to four STAs assigned to the same user position.

Minimal sets like the exemplary minimal sets 301-306 may be obtained from calculations based on the laws of combinatorics or from a trial-and-error approach. A trial-and-error approach may comprise testing all possible combinations of sets comprising groups with different combinations of stations, comprising different numbers of groups or comprising groups with different numbers of stations assigned to identical user positions.

According to an example, the term "minimal set" implies that that a minimal set of groups comprises the lowest possible number of groups that is necessary to obtain all possible combinations of the DL MU-MIMO capable STAs that are associated with a given AP. According to another example, the term "minimal set" as it is used herein does not necessarily imply that a particular minimal set of groups comprises the minimal number of groups, but a (slightly) higher number of STAs. In other words, a minimal set of groups does not necessarily have to be an "optimal" minimal set. However, a minimal set of groups may always enable the AP to obtain any combination of the DL MU-MIMO stations that are associated with the AP for a given number of STAs and a given number of simultaneous transmissions.

According to an example, employing a minimal set of groups may comprise the AP 101 assigning a specific STA to one or more specific groups and to a specific user position in each of these groups upon association (first association) of the STA with the AP 101. The STA may retain this assignment during the whole "lifetime" of the STA, that is, until disassociation of the STA from the AP 101. In particular, using a minimal set of groups it may not be necessary to assign a new group-ID to STAs each time that a change in the stations to which a DL MU-MIMO transmission is to be sent occurs. Instead, the AP may only have to use another one of the group-IDs of the given minimal set, which is already known by the stations.

According to an example, the AP 101 assigns a specific STA to one or more specific groups and to a specific user position in each of these groups in the case that the presently valid allocation of the STA into one or more groups is not beneficial. For example, assuming that eight DL MU-MIMO capable stations A-H are already associated with AP 101 and a further STA I becomes associated with the AP 101, then the AP 101 can no longer use the minimal sets 301 or 302 (or 303) in order to establish a DL MU-MIMO transmission with any three (or four) of the stations A-I. Instead, the AP 101 may need to use the minimal set of groups 304 and therefore has to communicate to each of the STAs A-I the group-IDs and user positions the STA belongs to in the minimal set of groups 304.

The AP 101 may communicate to a STA a group-ID of each group that the station belongs to in a given minimal set of groups as described in the 802.11ac standard. The AP 101 may furthermore communicate to the STA a user position in each group that the station belongs as described in the 802.11ac standard.

In particular, AP 101 may communicate assignments or changes of user positions corresponding to one or more group-IDs using the group-ID management frame defined in the 802.11ac standard. A STA may be assigned to multiple groups by setting multiple subfields of the membership status array field in the group-ID management frame addressed to that STA to 1. The user position of a STA in each group of which the STA is a member is indicated by the associated subfield in the user position array field in the group-ID management frame addressed to the STA. For each group-ID, the AP 101 may assign the same user position to multiple STAs. However, each STA may have only one user position in each group of which the STA is a member.

For example, in the case of minimal set of groups 301 of Fig. 3, the membership status array field for each one of the group-IDs 1 to 3 (groups 301_1 to 301_3) would be set to 1 for all STAs A to H. The user position array field e.g. of STA E would show that STA E has the user position 0 in group-ID 1, user position 1 in group-ID 2 and user position 2 in group-ID 3.

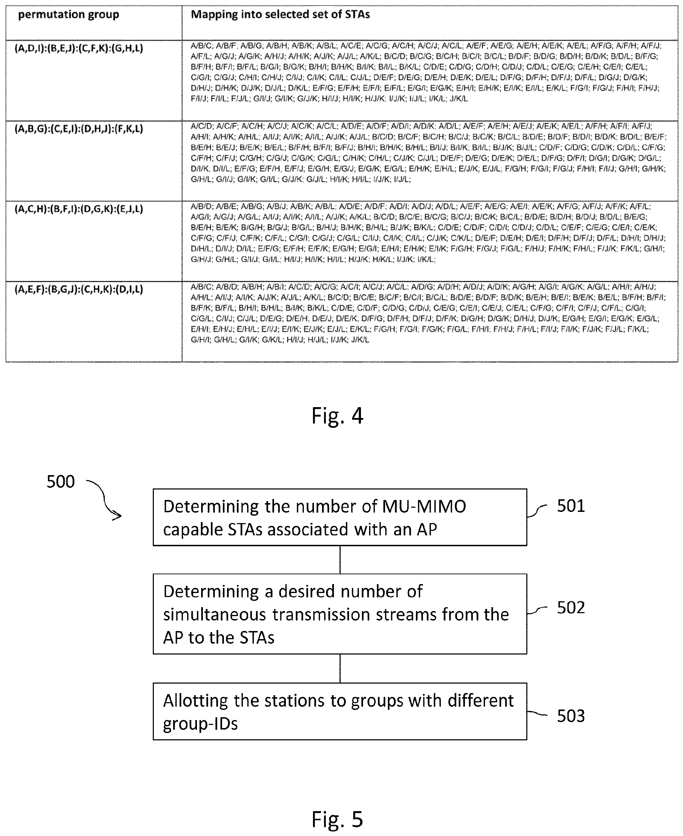

Figure 4 shows an example of how the minimal set of groups 304 of Fig. 3 covers all 220 possibilities of selecting three STAs out of 12 STAs for simultaneous transmission. For example, the entry "A/B/C" in the right column represents a possible simultaneous transmission to STAs A, B and C using the first group-ID of the minimal set of groups 304.

Figure 5 shows a method 500 of assigning group-IDs and user positions to stations in a wireless network. At 501 the method comprises determining a number of multi-user multiple-input-multiple-output capable stations associated with an access point. At 502 a desired number of simultaneous transmission streams is determined. At 503 the stations are allotted to a minimal set of groups, wherein each group has a different group-ID. Each station may have concurrent membership in at least two of the groups. Each user position in each group may be populated by two or more of the stations. User positions of the stations in the different groups may vary such that for any combination of the stations in the desired number at least one group exists in which the stations of that combination have different user positions.

The groups and user positions to which the stations are allotted at 503 may correspond to a minimal set, for example any one of the minimal sets 301 to 306. The method 500 may therefore also be a method for assigning stations to a minimal set.

According to an example, the method 500 may comprise assigning stations to more than one minimal set. For example, STAs may hold membership in a first minimal set of groups configured for DL MU-MIMO transmission to up to three STAs and may concurrently hold membership in a second minimal set of groups configured for DL MU-MIMO transmission to up to four STAs.

According to an example, STAs may hold membership in a minimal set of groups configured for a first maximum number of DL MU-MIMO capable STAs (e.g. eight STAs) and may hold concurrent membership in another minimal set of groups configured for a second maximum number of DL MU-MIMO capable STAs (e.g. 12 STAs).

According to an example, groups of different minimal sets, for example concurrently used minimal sets, may have different group-IDs.

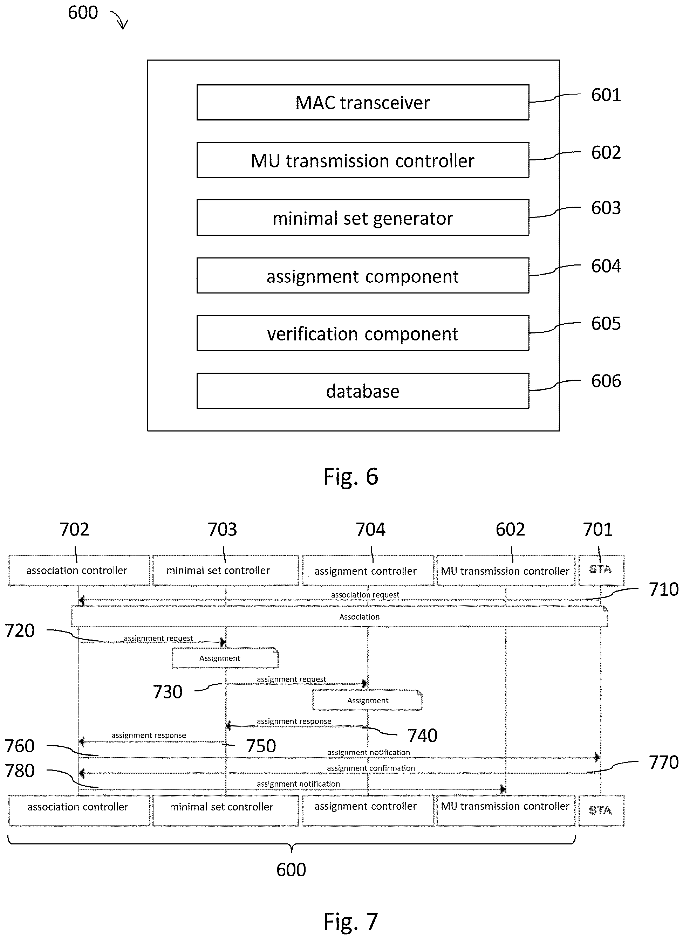

Figure 6 shows an example of an AP 600, wherein the AP 600 is configured to assign DL MU-MIMO capable STAs to one or more minimal sets. The AP 600 may for example be configured to use the minimal sets 301-306. The AP 600 may be configured to perform the method 500. The AP 600 may be identical with the AP 101 described further above.

The AP 600 comprises a MAC (media access control) transceiver 601 for transmitting and receiving radio signals. The AP 600 further comprises a MU transmission controller 602. The MU transmission controller 602 may be configured to enable DL MU-MIMO transmissions as described with respect to the previous Figures. The MU transmission controller 602 may be configured to determine a number of DL MU-MIMO capable stations associated with the AP 600 and to determine a desired number of simultaneous transmission streams.

The AP 600 may further comprise a minimal set of groups generator 603 configured to generate one or more minimal sets and to select a specific minimal set to be used for transmission. The minimal set of groups generator 603 may be configured to provide a minimal set of groups, wherein each group has a different group-ID.

According to an example, the minimal set of groups generator 603 may comprise a database listing possible preprogrammed minimal sets like the minimal sets 301 to 306.

The AP 600 may further comprise an assignment component 604 configured to assign a minimal set of groups to DL MU-MIMO capable STAs. The assignment component 604 may be configured to allot the STAs to groups of the minimal set, wherein each STA has concurrent membership in at least two of the groups, wherein each user position in each group may be populated by two or more of the STAs and wherein user positions of the STAs in the different groups vary such that for any combination of the STAs in the desired number at least one group exist in which the stations of that combination have different user positions.

The AP 600 may further comprise a verification component 605 configured to verify if each STA of a minimal set of groups has received the corresponding group-IDs and user positions.

The AP 600 may further comprise a database 606 that comprises all minimal sets in use, in particular the group-IDs and user positions of all STAs associated with the AP 600.

Figure 7 shows a process flow according to a method 700 for assigning group-IDs and user positions to STAs. The APs 101, 600 described above may be configured to perform the method 700. The method 700 may be part of the method 500.

According to the method 700, a DL MU-MIMO capable STA 701 may send an association request 710 to AP 600, in particular to association controller 702. The association controller 702 may send an assignment request 720 to minimal set of groups controller 703, requesting the STA 701 to be assigned to one or more minimal sets. The minimal set of groups controller 703 may choose to assign the STA 701 to one or more particular minimal sets, for example minimal sets with an empty slot. The minimal set of groups controller 703 may send an assignment request 730 to assignment controller 704, requesting the STA 701 to be assigned the relevant group-IDs and user positions in the chosen minimal set(s). The assignment controller 704 may send an assignment response 740 to the minimal set of groups controller 703, informing the minimal set of groups controller 703 about the group-IDs and user positions that were assigned to the STA 701. The minimal set of groups controller 703 may send an assignment response 750 to the association controller 702, informing the association controller 702 about the minimal set(s), group-IDs and user positions assigned to the STA 701. The association controller 702 may send an assignment notification 760 to the STA 701, informing the STA 701 about the group-IDs and user positions assigned to it. The STA 701 may send an assignment confirmation 770 to the association controller 702, confirming reception of the group-IDs and user positions. The association controller 702 may send a further assignment notification 780 to the MU transmission controller 602.

After reception of the assignment notification 780 the MU transmission controller 602 may set up a transmission to the STA 701 using (one of) the minimal set(s) chosen by the minimal set of groups controller 703.

According to an example, the acts 710-780 may be performed sequentially in the order described above. According to another example, one or more of the acts 710-780 may be performed sooner or later.

## EXAMPLES

The following examples pertain to further embodiments. Example 1 is a method of assigning group-IDs and user positions to stations in a wireless network, the method comprising: determining a number of multi-user multiple-input-multiple-output capable stations associated with an access point, selecting a set of stations that can be served simultaneously by the access point, mapping the set of stations to a minimal set of group-IDs, wherein each station has concurrent membership in at least two of the group-IDs, wherein each user position in each of the group-IDs may be populated by two or more of the stations, and wherein user positions of the stations in the different group-IDs vary such that for any combination of the stations from the set of stations at least one group-ID exists, in which the stations of that combination have different user positions, such that simultaneous transmission streams may be sent from the access point to any combination of the stations from the set of stations in a single physical layer convergence protocol data unit (PPDU).

In an example, the subject matter of Example 1 can optionally include that the group-IDs comprise IEEE 802.11 group-IDs. In a further example, the subject matter of Example 1 can optionally include that the group-IDs are IEEE 802.11 group-IDs. In Example 2, the subject matter of Example 1 can optionally include that each station has concurrent membership in at least three of the group-IDs.

In Example 3, the subject matter of one of the preceding Examples can optionally include that the number of group-IDs in the minimal set of group-IDs is smaller than the number of combinations of the stations.

In Example 4, the subject matter of one of the preceding Examples can optionally include that each station in the set of stations retains its allotted group-IDs and user positions from first association with the access point until disassociation from the access point.

In Example 5, the subject matter of one of the preceding Examples can optionally include that changing the stations to which simultaneous transmissions are to be sent comprises retaining the set of station's allotted group-IDs and user.

In Example 6, the subject matter of one of the preceding Examples further comprises: mapping a second set of stations to a second minimal set of group-IDs.

In Example 7, the subject matter of one of the preceding Examples can optionally include that the access point is segmented into at least two virtual access points.

In Example 8, the subject matter of one of the preceding Examples can optionally include that the number of combinations of the stations is bigger than the number of available group-IDs.

In Example 9, the subject matter of one of the preceding Examples can optionally include that group-IDs and user positions of the set of stations in the minimal set of group-IDs are predefined.

In Example 10, the subject matter of Example 9 can optionally include that the access point is configured to store usable minimal sets of groups in a database.

In Example 11, the subject matter of one of the preceding Examples can optionally include that each group has no more than four user positions.

In Example 12, the subject matter of one of the preceding Examples can optionally include that allotting the stations to a minimal set of groups comprises transmitting a dedicated management frame to each station, wherein the dedicated management frame comprises a group-ID.

In Example 13, the subject matter of Example 12 can optionally include that the dedicated management frame is comprised in the VHT-SIG-A field.

In Example 14, the subject matter of one of the preceding Examples can optionally include that the stations are allotted to more than one minimal set of groups.

In Example 15, the subject matter of Example 14 can optionally include that a first minimal set of groups is configured for use with a first maximal number of DL MU-MIMO capable STAs and a first desired number of DL MU-MIMO transmissions and a second minimal set of groups is configured for use with a second maximal number of DL MU-MIMO capable STAs and a second desired number of DL MU-MIMO transmissions, wherein the second maximal number is different from the first maximal number, or wherein the second desired number is different from the first desired number.

In Example 16, the subject matter of one of the preceding Examples can optionally include that a minimal set of groups is configured for use with a maximal number of eight DL MU-MIMO capable STAs and a maximal number of three simultaneous transmissions, wherein the minimal set of groups comprises no more than three groups, and wherein each user position of each group of the minimal set of groups is populated by no more than two STAs.

In Example 17, the subject matter of one of the Examples 1 to 15 can optionally include that a minimal set of groups is configured for use with a maximal number of eight DL MU-MIMO capable STAs and a maximal number of four simultaneous transmissions, wherein the minimal set of groups comprises no more than nine groups, and wherein each user position of each group of the minimal set of groups is populated by no more than two STAs.

In Example 18, the subject matter of one of the Examples 1 to 15 can optionally include that a minimal set of groups is configured for use with a maximal number of 12 DL MU-MIMO capable STAs and a maximal number of three simultaneous transmissions, wherein the minimal set of groups comprises no more than four groups, and wherein each user position of each group of the minimal set of groups is populated by no more than three STAs.

In Example 19, the subject matter of one of the Examples 1 to 15 can optionally include that a minimal set of groups is configured for use with a maximal number of 16 DL MU-MIMO capable STAs and a maximal number of three simultaneous transmissions, wherein the minimal set of groups comprises no more than five groups, and wherein each user position of each group of the minimal set of groups is populated by no more than four STAs.

In Example 20, the subject matter of one of the preceding Examples can optionally include that a station having a particular group-ID and user position may determine if a transmission stream is addressed to it and not another station with the same group-ID and user position by checking the MAC address.

In Example 21, the subject matter of one of the preceding Examples can optionally include that a minimal set of groups has a maximal number of 62 groups.

Example 22 is a WLAN access point configured to perform a method of one of the preceding Examples.

Example 23 is a WLAN access point, comprising a MU transmission controller configured to determine a number of multi-user multiple-input-multiple-output capable stations associated with the access point and to select a set of stations that can be served simultaneously by the access point, a minimal set generator configured to provide a minimal set of group-IDs based on the selected set of stations, and an assignment component configured to allot the set of stations to the group-IDs of the minimal set of group-IDs, wherein each station has concurrent membership in at least two of the group-IDs, wherein each user position in each group-ID may be populated by two or more of the stations, and wherein user positions of the stations in the different group-IDs vary such that for any combination of the stations from the set of stations at least one group-ID exists, in which the stations of that combination have different user positions, such that simultaneous transmission streams may be sent from the access point to any combination of the stations from the set of stations in a single physical layer convergence protocol data unit (PPDU).

In an example, the subject matter of Example 23 can optionally include that the group-IDs comprise IEEE 802.11 group-IDs. In a further example, the subject matter of Example 23 can optionally include that the group-IDs are IEEE 802.11 group-IDs. In Example 24, the subject matter of Example 23 or the previous examples can optionally include a verification component configured to verify if each one of the stations received its allotted group-IDs and user positions.

In Example 25, the subject matter of Example 23 or 24 can optionally include a database configured to store the minimal set of group-IDs.

In Example 26, the subject matter of one of Examples 23 to 25 can optionally include that the MU transmission controller is configured to switch transmission from a first group-ID of the minimal set of group-IDs to a second group-ID of the minimal set of group-IDs in case that a transmission to a particular subset of the stations is scheduled to be transmitted in a simultaneous transmission, wherein at least two stations of the particular subset of the stations have the same user position in the first group-ID, but different user positions in the second group-ID.

Example 27 is a computer readable non-transitory medium on which computer instructions are stored which when executed by a computer cause the computer to perform the method of assigning group-IDs and user positions to stations in a wireless network of any one of Examples 1 to 21. In an example, the group-IDs may comprise IEEE 802.11 group-IDs. In a further example, the group-IDs may be IEEE 802.11 group-IDs.

Example 28 is a WLAN access point, comprising: means for determining a number of multi-user multiple-input-multiple-output capable stations associated with the access point; means for determining a desired number of simultaneous transmission streams; and means for allotting the stations to a minimal set of groups, wherein each group has a different group-ID, wherein each station has concurrent membership in at least two of the groups, wherein each user position in each group may be populated by two or more of the stations, and wherein user positions of the stations in the different groups vary such that for any combination of the stations in the desired number at least one group exist in which the stations of that combination have different user positions.

In Example 29, the subject matter of Example 28 can optionally include: means for storing usable minimal sets of groups in a database.

In Example 30, the subject matter of one of the Examples 1 to 21 can optionally include that the wireless network adheres to the IEEE 802.11ac standard.

Example 31 is a WLAN communication system comprising a plurality of stations and a WLAN access point according to one of Examples 23 to 26.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

**Claims**

1. A method of assigning group-IDs and user positions to stations in a wireless network, the method comprising:

   determining a number of multi-user multiple-input-multiple-output capable stations associated with an access point;
   selecting a set of stations that can be served simultaneously by the access point;
   mapping the set of stations to a minimal set of group-IDs,
   wherein each station has concurrent membership in at least two of the group-IDs,
   wherein each user position in each of the group-IDs may be populated by two or more of the stations, and
   wherein user positions of the stations in the different group-IDs vary such that for any combination of the stations from the set of stations at least one group-ID exists, in which the stations of that combination have different user positions, such that simultaneous transmission streams may be sent from the access point to any combination of the stations from the set of stations in a single physical layer convergence protocol data unit (PPDU).

2. The method of claim 1, wherein each station has concurrent membership in at least three of the groups-IDs.

3. The method of claims 1 or 2, wherein the number of group-IDs in the minimal set of group-IDs is smaller than the number of combinations of the stations.

4. The method of one of the preceding claims, wherein each station in the set of stations retains its allotted group-IDs and user positions from first association with the access point until disassociation from the access point.

5. The method of one of the preceding claims, wherein changing the stations to which simultaneous transmissions are to be sent comprises retaining the set of station's allotted group-IDs and user.

6. The method of one of the preceding claims, further comprising: mapping a second set of stations to a second minimal set of group-IDs.

7. The method of one of the preceding claims, wherein the access point is segmented into at least two virtual access points.

8. The method of one of the preceding claims, wherein the number of combinations of the stations is greater than the number of available group-IDs.

9. The method of one of the preceding claims, wherein group-IDs and user positions of the set of stations in the minimal set of group-IDs are predefined.

10. The method of claim 9, wherein the access point is configured to store usable minimal sets of groups in a database.

11. A WLAN access point, comprising:

    a MU transmission controller configured to determine a number of multi-user multiple-input-multiple-output capable stations associated with the access point and to select a set of stations that can be served simultaneously by the access point;
    a minimal set generator configured to provide a minimal set of group-IDs based on the selected set of stations; and
    an assignment component configured to allot the set of stations to the group-IDs of the minimal set of group-IDs,
    wherein each station has concurrent membership in at least two of the group-IDs,
    wherein each user position in each group-ID may be populated by two or more of the stations, and
    wherein user positions of the stations in the different group-IDs vary such that for any combination of the stations from the set of stations at least one group-ID exists, in which the stations of that combination have different user positions, such that simultaneous transmission streams may be sent from the access point to any combination of the stations from the set of stations in a single physical layer convergence protocol data unit (PPDU).

**12.** The WLAN access point of claim 11, further comprising:

a verification component configured to verify if each one of the stations received its allotted group-IDs and user positions.

**13.** The WLAN access point of claim 11 or 12, further comprising:

a database configured to store the minimal set of group-IDs.

**14.** The WLAN access point of one of claims 11 to 13, wherein the MU transmission controller is configured to switch transmission from a first group-ID of the minimal set of group-IDs to a second group-ID of the minimal set of group-IDs in case that a transmission to a particular subset of the stations is scheduled to be transmitted in a simultaneous transmission, wherein at least two stations of the particular subset of the stations have the same user position in the first group-ID, but different user positions in the second group-ID.

**15.** A computer readable non-transitory medium on which computer instructions are stored which when executed by a computer cause the computer to perform the method of assigning group-IDs and user positions to stations in a wireless network of any one of claims 1 to 10.

**Fig. 1**

Fig. 2A

Fig. 2B

Fig. 2C

Fig. 2D

EP 3 462 756 A1

12

300

| Max. number of MU-MINO capable STAs | MU-MIMO transmission to three STAs | MU-MIMO transmission to four STAs |
|---|---|---|
| 8 | *(A,E):(B,F):(C,G):(D,H);*   301_1<br>*(A,D):(B,E):(C,F):(G,H);*   301_2   } 301<br>*(A,C):(B,D):(E,G):(F,H);*   301_3<br><br>*Other option:*<br>*(A,E):(B,F):(C,G):(D,H);*<br>*(A,C):(B,D):(E,G):(F,H);* } 302<br>*(A,B):(C,F):(D,G):(E,H):* | *(A,E):(B,F):(C,G):(D,H);*<br>*(A,D):(B,F):(C,G):(E,H);*<br>*(A,D):(B,E):(C,G):(F,H);*<br>*(A,D):(B,E):(C,F):(G,H);*<br>*(A,C):(B,F):(D,G):(E,H);* } 303<br>*(A,C):(B,E):(D,G):(F,H);*<br>*(A,C):(B,D):(E,G):(F,H);*<br>*(A,B):(C,F):(D,G):(E,H);*<br>*(A,B):(C,E):(D,F):(G,H)* |
| 12 | *(A,D,I):(B,E,J):(C,F,K):(G,H,L);*<br>*(A,B,G):(C,E,I):(D,H,J):(F,K,L);* } 304<br>*(A,C,H):(B,F,I):(D,G,K):(E,J,L);*<br>*(A,E,F):(B,G,J):(C,H,K):(D,I,L)* | |
| 16 | *(A,E,I,M):(B,F,J,N):(C,G,K,O):(D,H,L,P);*<br>*(A,C,H,M):(B,D,I,N):(E,F,J,O):(G,K,L,P);*<br>*(A,C,F,J):(B,G,K,L):(D,H,M,O):(E,I,N,P);* } 305<br>*(A,D,G,L):(B,E,H,M):(C,I,J,N):(F,K,O,P);*<br>*(A,E,F,L):(B,G,J,M):(C,H,K,N):(D,I,O,P);*<br><br>*Other option:*<br>*(A,E,I,M):(B,F,J,N):(C,G,K,O):(D,H,L,P);*<br>*(A,C,H,L):(B,D,I,N):(E,F,J,O):(G,K,M,P);*<br>*(A,B,H,M):(C,F,I,N):(D,G,J,O):(E,K,L,P);* } 306<br>*(A,B,F,K):(C,G,H,N):(D,I,L,O):(E,J,M,P);*<br>*(A,E,F,L):(B,G,J,M):(C,H,K,O):(D,I,N,P);* | |

Fig. 3

| permutation group | Mapping into selected set of STAs |
|---|---|
| (A,D,I):(B,E,J):(C,F,K):(G,H,L) | A/B/C; A/B/F; A/B/G; A/B/H; A/B/K; A/B/L; A/C/E; A/C/G; A/C/H; A/C/J; A/C/L; A/E/F; A/E/G; A/E/H; A/E/K; A/E/L; A/F/G; A/F/H; A/F/J; A/F/L; A/G/J; A/G/K; A/H/J; A/H/K; A/J/K; A/J/L; A/K/L; B/C/D; B/C/G; B/C/H; B/C/I; B/C/L; B/D/F; B/D/G; B/D/H; B/D/K; B/D/L; B/F/G; B/F/H; B/F/I; B/F/L; B/G/I; B/G/K; B/H/I; B/H/K; B/I/K; B/I/L; C/D/E; C/D/G; C/D/H; C/D/J; C/D/L; C/E/G; C/E/H; C/E/I; C/E/L; C/G/I; C/G/J; C/H/I; C/H/J; C/I/J; C/I/K; C/I/L; C/J/L; D/E/F; D/E/G; D/E/H; D/E/K; D/E/L; D/F/G; D/F/H; D/F/L; D/G/J; D/G/K; D/H/J; D/H/K; D/J/K; D/J/L; D/K/L; E/F/G; E/F/H; E/F/I; E/F/L; E/G/I; E/G/K; E/H/I; E/H/K; E/I/K; E/I/L; E/K/L; F/G/I; F/G/J; F/H/I; F/H/J; F/I/J; F/I/L; F/J/L; G/I/J; G/I/K; G/J/K; H/I/J; H/I/K; H/J/K; I/J/K; I/J/L; I/K/L; J/K/L |
| (A,B,G):(C,E,I):(D,H,J):(F,K,L) | A/C/D; A/C/F; A/C/H; A/C/J; A/C/K; A/C/L; A/D/E; A/D/F; A/D/I; A/D/K; A/D/L; A/E/F; A/E/H; A/E/J; A/E/K; A/E/L; A/F/H; A/F/I; A/F/J; A/H/I; A/H/K; A/H/L; A/I/J; A/I/K; A/I/L; A/J/K; A/J/L; B/C/D; B/C/F; B/C/H; B/C/J; B/C/K; B/C/L; B/D/E; B/D/F; B/D/I; B/D/K; B/D/L; B/E/F; B/E/H; B/E/J; B/E/K; B/E/L; B/F/H; B/F/I; B/F/J; B/H/I; B/H/K; B/H/L; B/I/J; B/I/K; B/I/L; B/J/K; B/J/L; C/D/F; C/D/G; C/D/K; C/D/L; C/F/G; C/F/H; C/F/J; C/G/H; C/G/J; C/G/K; C/H/K; C/H/L; C/J/K; C/J/L; D/E/F; D/E/G; D/E/K; D/E/L; D/F/G; D/F/I; D/G/H; D/G/L; D/I/K; D/I/L; E/F/G; E/F/H; E/F/J; E/G/H; E/G/J; E/G/K; E/G/L; E/H/K; E/H/L; E/J/K; E/J/L; F/G/H; F/G/I; F/G/J; F/H/I; F/I/J; G/H/I; G/H/K; G/H/L; G/I/J; G/I/K; G/I/L; G/J/K; G/J/L; H/I/K; H/I/L; I/J/K; I/J/L; |
| (A,C,H):(B,F,I):(D,G,K):(E,J,L) | A/B/D; A/B/E; A/B/G; A/B/J; A/B/K; A/B/L; A/D/E; A/D/F; A/D/I; A/D/J; A/D/L; A/E/F; A/E/G; A/E/I; A/E/K; A/F/G; A/F/J; A/F/K; A/F/L; A/G/I; A/G/L; A/I/J; A/I/K; A/I/L; A/J/K; A/K/L; B/C/D; B/C/E; B/C/G; B/C/K; B/C/L; B/D/E; B/D/H; B/D/J; B/D/L; B/E/G; B/E/H; B/E/K; B/G/H; B/G/J; B/G/L; B/H/J; B/H/K; B/H/L; B/J/K; B/K/L; C/D/E; C/D/F; C/D/I; C/D/J; C/D/L; C/E/F; C/E/G; C/E/I; C/E/K; C/F/G; C/F/K; C/F/L; C/G/I; C/G/J; C/G/L; C/I/J; C/I/K; C/I/L; C/J/K; C/K/L; D/E/F; D/E/H; D/E/I; D/F/H; D/F/L; D/H/I; D/H/J; D/H/L; D/I/J; D/I/L; E/F/G; E/F/H; E/F/K; E/G/H; E/G/I; E/H/I; E/H/K; E/I/K; F/G/H; F/G/J; F/G/L; F/H/J; F/H/K; F/H/L; F/J/K; F/K/L; G/H/I; G/H/J; G/H/L; G/I/J; G/I/L; H/I/J; H/I/K; H/I/L; H/J/K; H/K/L; I/J/K; I/K/L; |
| (A,E,F):(B,G,J):(C,H,K):(D,I,L) | A/B/C; A/B/D; A/B/H; A/B/I; A/C/D; A/C/G; A/C/I; A/C/J; A/C/L; A/D/G; A/D/H; A/D/J; A/D/K; A/G/H; A/G/I; A/G/K; A/G/L; A/H/I; A/H/J; A/H/L; A/I/K; A/I/L; A/J/K; A/J/L; A/K/L; B/C/D; B/C/E; B/C/F; B/C/I; B/C/L; B/D/E; B/D/F; B/D/H; B/E/H; B/E/I; B/F/H; B/F/I; B/F/K; B/F/L; B/H/I; B/H/L; B/I/K; B/K/L; C/D/E; C/D/F; C/D/G; C/D/J; C/E/G; C/E/I; C/E/J; C/E/L; C/F/G; C/F/I; C/F/J; C/F/L; C/G/I; C/G/L; C/I/J; C/J/L; D/E/G; D/E/H; D/E/J; D/E/K; D/F/G; D/F/H; D/F/J; D/F/K; D/G/H; D/G/K; D/H/J; D/J/K; D/K/L; E/G/H; E/G/I; E/G/K; E/G/L; E/H/I; E/H/J; E/H/L; E/I/J; E/I/K; E/J/K; E/J/L; E/K/L; F/G/H; F/G/I; F/G/K; F/G/L; F/H/I; F/H/J; F/H/L; F/I/J; F/I/K; F/J/K; F/J/L; F/K/L; G/H/I; G/H/L; G/I/K; G/K/L; H/I/J; H/J/L; I/J/K; J/K/L |

Fig. 4

500

- 501 — Determining the number of MU-MIMO capable STAs associated with an AP
- 502 — Determining a desired number of simultaneous transmission streams from the AP to the STAs
- 503 — Allotting the stations to groups with different group-IDs

Fig. 5

600

| MAC transceiver | 601 |
| MU transmission controller | 602 |
| minimal set generator | 603 |
| assignment component | 604 |
| verification component | 605 |
| database | 606 |

Fig. 6

702 703 704 602 701

| association controller | minimal set controller | assignment controller | MU transmission controller | STA |

association request — 710

Association

720 — assignment request

Assignment

730 — assignment request

Assignment

assignment response

760 — assignment response — 750 — 740

assignment notification

780 — assignment confirmation — 770

assignment notification

| association controller | minimal set controller | assignment controller | MU transmission controller | STA |

600

Fig. 7

Europäisches
Patentamt

European
Patent Office

Office européen
des brevets

# EUROPEAN SEARCH REPORT

Application Number

EP 17 19 4162

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/086061 A1 (HUANG XIAOLONG [US] ET AL) 23 March 2017 (2017-03-23) <br> * paragraph [0029] - paragraph [0049] * <br> * figures 1-3,12 * | 1-15 | INV. <br> H04W4/08 <br> H04B7/0452 <br> H04W84/12 <br> H04W72/12 |
| X | WO 2016/195895 A1 (QUALCOMM INC [US]) 8 December 2016 (2016-12-08) <br> * paragraph [0059] - paragraph [0073] * <br> * figures 1-9 * | 1-15 | |
| X | WO 2011/146415 A1 (QUALCOMM INC [US]; ABRAHAM SANTOSH PAUL [US]; VERMANI SAMEER [US]; WEN) 24 November 2011 (2011-11-24) <br> * paragraph [0070] - paragraph [0108] * <br> * figures 1-12 * | 1-15 | |
| X | WO 2011/137195 A1 (QUALCOMM INC [US]; ABRAHAM SANTOSH PAUL [US]; VERMANI SAMEER [US]; SAM) 3 November 2011 (2011-11-03) <br> * paragraph [0061] - paragraph [0074] * | 1-15 | |

TECHNICAL FIELDS
SEARCHED (IPC)

H04W
H04B

The present search report has been drawn up for all claims

| Place of search | Date of completion of the search | Examiner |
|---|---|---|
| The Hague | 15 January 2018 | Gioè, Pietro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 19 4162

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2018

| Patent document cited in search report | Publication date | Patent family member(s) | Publication date |
|---|---|---|---|
| US 2017086061 A1 | 23-03-2017 | NONE | |
| WO 2016195895 A1 | 08-12-2016 | TW 201644308 A | 16-12-2016 |
| | | US 2016360542 A1 | 08-12-2016 |
| | | UY 36704 A | 30-11-2016 |
| | | WO 2016195895 A1 | 08-12-2016 |
| WO 2011146415 A1 | 24-11-2011 | CN 102959998 A | 06-03-2013 |
| | | CN 105337649 A | 17-02-2016 |
| | | DK 2572522 T3 | 22-09-2014 |
| | | EP 2572522 A1 | 27-03-2013 |
| | | EP 2804405 A2 | 19-11-2014 |
| | | ES 2502744 T3 | 06-10-2014 |
| | | JP 5619991 B2 | 05-11-2014 |
| | | JP 6034347 B2 | 30-11-2016 |
| | | JP 2013528329 A | 08-07-2013 |
| | | JP 2015046880 A | 12-03-2015 |
| | | JP 2017063443 A | 30-03-2017 |
| | | KR 20130041814 A | 25-04-2013 |
| | | KR 20140072921 A | 13-06-2014 |
| | | PT 2572522 E | 09-09-2014 |
| | | US 2012120931 A1 | 17-05-2012 |
| | | US 2013070748 A1 | 21-03-2013 |
| | | US 2017135069 A1 | 11-05-2017 |
| | | WO 2011146415 A1 | 24-11-2011 |
| WO 2011137195 A1 | 03-11-2011 | CA 2795969 A1 | 03-11-2011 |
| | | CN 102859897 A | 02-01-2013 |
| | | EP 2564515 A1 | 06-03-2013 |
| | | EP 2637320 A2 | 11-09-2013 |
| | | JP 6117173 B2 | 19-04-2017 |
| | | JP 2013529011 A | 11-07-2013 |
| | | JP 2015130660 A | 16-07-2015 |
| | | KR 20130014689 A | 08-02-2013 |
| | | RU 2012150434 A | 10-06-2014 |
| | | US 2012039266 A1 | 16-02-2012 |
| | | WO 2011137195 A1 | 03-11-2011 |
| | | ZA 201208898 B | 31-07-2013 |

EPO FORM P0459

For more details about this annex : see Official Journal of the European Patent Office, No. 12/82